# NEUE EUROPÄISCHE PATENTSCHRIFT

(11) **EP 2 478 341 B3**
(45) Veröffentlichungstag dieser Patentschrift: **02.09.2026**
(45) Hinweis auf die Patenterteilung: 05.08.2020
(21) Anmeldenummer: 10742078.8
(22) Anmeldetag: 22.06.2010
(51) Int. Cl.: G01G 19/414, B60N 2/00, B60R 21/015, B60N 2/70

(54) **DRUCKSENSOR-EINHEIT**
PRESSURE SENSOR UNIT
UNITÉ DE CAPTEUR DE PRESSION

(30) Priorität: 14.09.2009 DE 202009012350 U; 12.03.2010 DE 202010003563 U
(43) Veröffentlichungstag der Anmeldung: 25.07.2012
(73) Patentinhaber: I.G. Bauerhin GmbH, 63584 Gründau (DE); Lear Corporation, Southfield, MI 48033 (US)
(72) Erfinder: NEIDHARDT, Tobias, 63699 Kefenrod-Helfersdorf (DE); YETIM, Züher, 63571 Gelnhausen (DE)
(74) Vertreter: Grünecker Patent- und Rechtsanwälte PartG mbB
(86) Internationale Anmeldenummer: PCT/EP2010/003738
(87) Internationale Veröffentlichungsnummer: WO 2011/029491

(56) Entgegenhaltungen:
- EP-A1- 2 093 101
- EP-A1- 2 093 101
- JP-A- 2005 035 516
- JP-A- 2005 035 516
- US-A1- 2009 056 020
- US-A1- 2009 056 020
- US-B1- 6 999 301
- US-B1- 6 999 301

## Beschreibung

Die vorliegende Erfindung betrifft eine Drucksensor-Einheit gemäß dem Oberbegriff des Anspruchs 1.

### Stand der Technik

Aus unterschiedlichen Gründen ist es erwünscht, den Belegungszustand eines Sitzes zu erfassen. Eine solche Sitzbelegungserkennung wird insbesondere in die Sitze von Kraftfahrzeugen aus Gründen der passiven Sicherheit der Fahrzeuginsassen eingebaut. Solche der Sitzbelegungserkennung dienenden Einrichtungen sind heutzutage Standard in allen Neufahrzeugen. Die Sitzbelegungserkennung dient unter anderem dazu, den Fahrzeuginsassen darauf hinzuweisen, einen Sicherheitsgurt anzulegen, oder aber auch dazu, zu unterscheiden, ob der Sitz tatsächlich durch eine Person belegt ist oder ob auf dem Sitz nur Gegenstände abgelegt sind.

Für eine solche Sitzbelegungserkennung sind unter anderem Drucksensor-Einheiten üblich, die aus einer Vielzahl von druckempfindlichen Sensorelementen bestehen. Solche Einheiten umfassen Foliendrucksensoren mit zwei übereinander liegenden und mittels Abstandmaterial auf Abstand gehaltenen Folien auf. Sie werden im hinteren, mittleren Bereich des Fahrzeugsitzkissens angeordnet und können somit die Druckeinwirkung einer Person oder eines Objektes auf dieser Sitzfläche erfassen. Foliendrucksensoren sind äußerst flexibel und werden auf der der Sitzfläche zugewandten Seite eines Schaumstoffkerns des Sitzes aufgebracht, der die Folienstruktur stabilisiert. Es ist auch bekannt, solche Foliendrucksensoren in den Schaumstoffkern der Sitzstruktur oder auf der der Sitzfläche abgewandten Seite des Schaumstoffkerns zu positionieren. Falls der entsprechende Sitz mit einer Sitzheizung ausgestattet ist, kann der Sitzbelegungssensor direkt auf einer Sitzheizung, die sich unmittelbar auf dem Schaumstoffkern befindet, positioniert sein.

Eine wesentliche Forderung an solche Sitzbelegungssensoren ist diejenige, dass sie positionsstabil in den Sitz eingebaut werden müssen, damit eine exakte, ortsabhängige Detektion gewährleistet ist.

Eine Vorrichtung zur Sitzbelegungserkennung für ein Kraftfahrzeug ist aus der DE 44 06 897 C1 bekannt. Diese Sitzbelegungserkennung dient insbesondere dazu, eine Airbagauslösung bei nicht belegtem Sitz zu sperren. Der Sitzbelegungssensor ist in verschiedene Bereiche unterteilt und eine Sitzbelegung wird durch Auswertung des Ansprechverhaltens des Sitzbelegungssensors in diesen Bereichen erfasst. Die Aufteilung der Sensoranordnung befindet sich, ausgehend von der vorderen Sitzkante, zum einen im vorderen Bereich und zum anderen im hinteren Bereich des Sitzkissens.

Weiterhin ist aus der DE 42 37 072 C1 bekannt, dass die Position des Sitzbelegungssensors zwischen einem Sitzbezug und einer darunter liegenden Gummihaarmatte, innerhalb der Gummihaarmatte, zwischen der Gummihaarmatte und einem Federrahmen des Sitzes oder unmittelbar oberhalb einer Sitzschale angeordnet werden kann.

Aus der DE 103 37 992 A1 ist eine Vorrichtung zur Erkennung der Sitzbelegung eines Sitzes in einem Kraftfahrzeug bekannt. Diese Anordnung umfasst eine Sensorschicht, die auf der Oberseite einer Trägereinrichtung, das bedeutet auf der Oberseite des Sitzkonsole, angeordnet ist, und die einen über die Sitzfläche eingeleiteten Druck aufnimmt und abhängig von diesem Druck Messsignale erzeugt.

Aus der EP 2 093 101 A1 ist ein flexibler Sitzsensor zum Anordnen in einem Sitz bekannt. Der flexible Sitzsensor ist zwischen einer flexiblen Ummantelung angeordnet, wobei diese Ummantelung hüllenartig bzw. taschenartig zusammenlaminiert ist. An den Seiten weist die flexible, hüllenartige Ummantelung, die aus Filz gebildet sein kann, Befestigungselemente, die als Schlaufen ausgeführt sind, die zur Befestigung an einem Sitz dienen, auf. Aus Abschnitt [0019] ist zu entnehmen, dass der Sitzsensor auf der A-Fläche eines Sitzes angeordnet werden soll, d.h. auf der Fläche, die dem Benutzer des Sitzes zugewandt ist.

Aus der US 6,99,301 B1 ist eine kapazitive Wägezelle zum Erfassen des Gewichts eines Insassen, der auf einem Fahrzeugsitz sitzt, bekannt. Dabei weist die Wägezelle eine erste und eine zweite leitende Platte auf, die durch ein zusammendrückbares Dielektrikum voneinander getrennt sind, so dass eine auf die Wägezelle aufgebrachte Kraft das Dielektrikum zusammendrückt, um die Kapazität zwischen der ersten und der zweiten leitenden Platte zu ändern. Es ist auch angegeben, dass die Wägezelle als Schutz gegen Feuchtigkeit, Staub und Schaumstoffpartikel des Sitzpolsters durch eine polymere Hülle umschlossen werden kann.

In der US 2009 0056 020 A1 ist ein Drucksensor zur Druckerfassung und -messung beschrieben, der beispielsweise in Verbindung mit einer aufblasbaren Liegefläche für einen Patienten eingesetzt wird, um in Abhängigkeit des Gewichts des Patienten die Liegefläche bzw. die Matratze aufzublasen. Der Drucksensor umfasst eine Kraft-Detektionszelle (FSR-Zelle) sowie eine in Größe und Form der Kraftzelle zugeordnete Gegenplatte, zum Beispiel aus Aluminium oder Epoxidharz. Die Zelle und die Gegenplatte sind in einer deren Außenkontur entsprechende Ausnehmung in einer Zwischenschicht eingelegt, wobei die Zwischenschicht, die als Rahmen ausgebildet ist, aus einem komprimierbaren Material besteht. Diese Zwischenschicht mit der in die Ausnehmung eingelegten Gegenplatte und Zelle ist durch eine zweite Zwischenschicht abgedeckt. Die erste Zwischenschicht ist mit einer ersten Schutzplatte verbunden und die zweite Zwischenschicht ist mit einer zweiten Schutzplatte verbunden. Durch die beiden Schutzplatten soll ermöglicht werden, dass ein punktueller Druck oder ein linienförmiger Druck, der über die Liegefläche aufgebracht wird, über eine größere Fläche der Widerstandszelle verteilt wird. Aus der JP 2005 35516 A ist eine Sitzanordnung für Fahrzeuge zur Erfassung einer auf die Sitzoberfläche einwirkenden Last bekannt. Die Sitzanordnung besitzt ein Sitzkissengestell, ein Grundelement, das unterhalb der Sitzoberfläche angeordnet ist, Halteelemente, beispielsweise eine Vielzahl von Federn, um das Grundelement an dem Sitzkissengestell in allen Richtungen federnd aufgehängt zu tragen, ein flexibles Element, das an dem Grundelement angebracht ist, eine Erfassungseinrichtung, die an dem flexiblen Element vorgesehen ist, und ein Plattenelement, das durch das flexible Element gehalten ist und auf das die Last einwirkt. Bei dem flexiblen Element handelt es sich um ein biegbares Teil in Form einer Lasche, auf der ein Sensorelement angeordnet ist. Diese Lasche ist an beiden Enden eingespannt, wie dies beispielsweise die Figur 12 zeigt; über ein Verbiegen der Lasche wird die Größe einer Last, die auf die Sitzfläche einwirkt, erfasst, wozu beispielsweise dieses flexible Element Teil einer Wheatstone-Brücke bildet, wie dies in den Figuren 9 und 10 dargestellt ist. Auch anhand der weiteren Figuren ist die laschenartige Ausbildung des flexiblen Elements zu erkennen, beispielsweise in den Figuren 14 und 15 und in den Figuren 17 und 19.

Anordnungen, wie sie aus dem Stand der Technik bekannt sind und vorstehend beschrieben sind, haben den Nachteil, dass sie jeweils auf die Einsatzbedingungen abgestimmt und ausgelegt werden müssen. Jede Sitzstruktur erfordert daher die Anpassung und Integration der Drucksensor-Einheiten an den jeweiligen Sitz.

### Aufgabe

Der vorliegenden Erfindung liegt nun die Aufgabe zugrunde, eine Drucksensor-Einheit zum Detektieren des Belegungszustands eines Sitzes zu schaffen, die unabhängig von der speziellen Sitzstruktur universell einsetzbar ist und die nur geringe Anpassungen an die jeweiligen Einsatzbedingungen erfordert.

### Erfindung

Die Aufgabe wird durch eine Drucksensor-Einheit mit den Merkmalen des Anspruchs 1 gelöst. Vorteilhafte Ausgestaltungen der Drucksensor-Einheit ergeben sich aus den abhängigen Ansprüchen.

Die erfindungsgemäße Drucksensor-Einheit ist als Modul aufgebaut, das als selbst tragende Einheit gefertigt werden kann. Sie umfasst eine Grundplatte, auf der das Sensorelement in Form mindestens eines Foliensensors aufgebracht ist. Der Foliensensor umfasst zwei über ein Abstandsmaterial auf Abstand gehaltene Folien. Weiterhin umfasst die Grundplatte Verbindungselemente mittels der die Grundplatte an der tragenden Struktur eines Sitzes verbindbar ist. Dieses selbst tragende Modul, gestützt durch die Grundplatte, kann universell in verschiedene Sitzstrukturen als vorgefertigte Einheit integriert werden. Es ist somit nicht erforderlich, die Sensoranordnung dem Sitzpolster eines speziellen Sitzes anzupassen.

Ein Foliendrucksensor, wie er beispielsweise auch in der erfindungsgemäßen Drucksensor-Einheit eingesetzt wird, ist in der EP 758 741 A2 beschrieben. Es können aber auch andere Foliensensoren verwendet werden, die mindestens zwei Folien mit einem dazwischen liegenden Abstandsmaterial aufweisen.

Die erfindungsgemäße Drucksensor-Einheit zeichnet sich weiterhin dadurch aus, dass eine Positionierung des Sensors an jedem einzelnen Sitz entfällt, da der Foliensensor auf der Grundplatte vorfixiert ist und in den jeweiligen Sitz nur die Grundplatte einzubauen ist.

Da die Drucksensor-Einheit in der tragenden Struktur eines Sitzes, das bedeutet in das tragende Sitzgestell, beispielsweise in den Rahmen oder als Teil der Sitzfederstruktur, eingebaut werden kann, ist die Drucksensor-Einheit weit weg von der Sitzoberfläche positioniert und dadurch praktisch nicht der Feuchtigkeit ausgesetzt, die über die Sitzfläche in den Sitz eingebracht wird.

Bei der Integration der Drucksensor-Einheit in eine Sitzstruktur muss eventuell vorhandenen Abspanngräben im Schaumstoffkern, die die einzelnen Sitzflächenbereiche voneinander trennen, keine Beachtung geschenkt werden.

Ein weiterer Vorteil liegt darin, dass die Drucksensor-Einheit in dieser Modul-Form keiner Beeinflussung durch die Sitzheizung unterliegt. Weiterhin sind für den Einbau der Drucksensor-Einheit keine Aussparungen im Schaumstoffkern des Sitzpolsters auf der der Sitzfläche zugewandten Seite erforderlich.

Da die Drucksensor-Einheit weit weg von der Sitzoberfläche eingebaut werden kann, ergeben sich keine Haptikprobleme, die gerade dann vorhanden sind, wenn die Drucksensoren unmittelbar unterhalb des Sitzbezugsstoffes angeordnet werden.

Falls der Foliendrucksensor direkt unterhalb des Sitzbezugs positioniert wäre, könnte es zu einem Aneinanderreiben der Sensoroberfläche und der Unterseite des Sitzbezugs kommen, wenn sich der auf dem Sitz sitzende Insasse hin- und herbewegt. Da der Sensor aber weit weg von der Sitzoberfläche positioniert ist, kann es zu keinen hörbaren Geräuschen kommen.

Hervorzuheben ist auch, dass durch die feste Unterlage aufgrund der Grundplatte, auf der die Foliensensoren angeordnetsind, eine bessere Krafteinwirkung der Gewichtskraft auf den Sensor erreicht wird. Dadurch können kleinere Sensorelemente verwendet werden.

In einer Ausführungsform der Drucksensor-Einheit sind auf der Grundplatte mehrere Foliensensoren angeordnetsind, die über die Fläche der Grundplatte verteilt sind. Hierbei sind die Foliensensoren bevorzugtsymmetrisch zu einer Mittellinie der Grundplatte verteilt angeordnet, so dass beispielsweise über das sich gleichmäßig über die Sitzfläche verteilende Gewicht einer Person eine Sitzbelegung erkennbar ist.

Die Grundplatte kann durch eine Kunststoffplatte, vorzugsweise aus Polyamid (PA) oder Polypropylen (PP), gebildet werden, die den Vorteil hat, dass sie eine Grundsteifigkeit besitzt, aber dennoch in gewissen Grenzen eine Flexibilität zeigt. Außerdem kann sie in Dicke und Größe einfach den Erfordernissen angepasst werden. Die Grundplatte sollte eine Dicke von 2 bis 10 mm, vorzugsweise von 2 bis 5 mm, aufweisen.

Um eine solche Grundplatte in einfacher Weise in einen Sitz integrieren bzw. montieren zu können, wird zumindest ein Teil der Verbindungselemente durch Haken zum Einhaken, beispielsweise in die Federelemente der Sitzstruktur, gebildet. Als Alternative zu den Haken, aber auch zusätzlich dazu, können die Verbindungselemente durch Ösen, Rastelemente oder auch einfache Bohrungen gebildet werden.

Die Grundplatte sollte eine ebene Grundfläche aufweisen, auf der der/die Foliensensor(en) angeordnet ist/sind.

Um die Stabilität der Grundplatte zu erhöhen, kann die Grundplatte an den Seiten abgewinkelt werden.

Weiterhin sollte die Grundplatte als vorgefertigtes Teil Markierungen für die Positionierung des Foliensensors/der Foliensensoren aufweisen, um die Montage der Sensoren in reproduzierbarer Weise zu erleichtern. Hierzu können auch Positionierungshilfen in Form von Aussparungen vorgesehen werden.

Vorzugsweise wird/werden der/die Foliensensor(en) mittels Acrylat-Kleber an der Zwischenschicht verklebt. Acrylat-Kleber zeichnet sich dadurch aus, dass dieser trotz der im Fahrzeug auftretenden Bewegungen in einem weiten Temperaturbereich haftfähig und dehnbar bleibt.

Die Zwischenschicht könnte auch aus einem textilen Material gebildet werden. Hierbei kann es sich beispielsweise um ein Vlies oder Gewirke oder Gestricke handeln. Der/die Foliensensor(en) sollte(n) Anschlüsse aufweisen, die über mindestens ein an der Grundplatte angeordnetes Anschlusselement an eine externe Verkabelung anschließbar sind. Hierdurch wird der Einbau der Drucksensor-Einheit vereinfacht.

Die Drucksensor-Einheit bzw. die Grundplatte mit den Foliendrucksensoren ist bevorzugt als Teil eines Sitzkissenfederungssystems in einen Sitz integrierbar und bildet dann einen Teil der tragenden Struktur des Sitzes, die die Polsterstruktur des Sitzes stützt.

Vorzugsweise werden der Foliensensor, die Zwischenschicht und die Grundplatte mittels Befestigungsteil(en) miteinander verbunden. Solche Befestigungsteile können derart aufgebaut sein, dass sie die Teile dauerhaft miteinander verbinden, das bedeutet, sie sind, wenn überhaupt, nur mit speziellen Werkzeugen oder durch Zerstörung voneinander lösbar.

Die Befestigungsteile können in Form von Clipsen vorliegen, die durch entsprechende deckungsgleiche Bohrungen in dem Foliensensor, der Zwischenschicht und der Grundplatte hindurch gesteckt werden und diese Teile miteinander verbinden.

Ein solches Befestigungsteil kann im Bereich des Anschlusselements direkt mit der Grundplatte verbunden werden, um so das Anschlusselement an der Grundplatte zu befestigen.

Die Drucksensor-Einheit kann eine Deckschicht aufweisen, die den Foliensensor zumindest auf seiner der Zwischenschicht gegenüber liegenden Seite durch eine Deckschicht abgedeckt. Mit einer solchen Deckschicht können Unebenheiten des darauf liegenden Schaumkörpers ausgeglichen werden. Außerdem wird der Foliensensor durch eine solche Deckschicht auf seiner zur Polsterstruktur hinweisenden Seite geschützt.

Auch eine solche Deckschicht kann mittels mindestens eines Befestigungsteils, gegebenenfalls zusammen mit den anderen Teilen, an dem Foliensensor oder auch an der Grundplatte, befestigt werden. Eine alternative oder zusätzliche Maßnahme, um die Deckschicht an dem Foliensensor zu halten, ist diejenige, die Deckschicht auf dem Foliensensor, beispielsweise mittels Schmelzkleber, aufzubügeln.

Das mindestens eine Befestigungsteil, das im Bereich des Anschlussteils angeordnet ist, kann als Abdeckteil ausgebildet werden, um nicht nur das Anschlussteil an der Grundplatte zu befestigen, sondern gleichzeitig das Anschlussteil abzudecken und so zu schützen.

Die Befestigungsteile, wie sie vorstehend beschrieben sind, können als separate Teile, beispielsweise in Form von Clipsen, ausgeführt sein, die sich in entsprechende Öffnungen verriegeln. Es sind aber auch zweiteilige Befestigungsteile möglich, die durch entsprechende Öffnungen von der Oberseite und der Unterseite der Platten hindurch gesteckt und miteinander verbunden werden. Eine weitere Anordnung ist diejenige, dass die Befestigungsteile fest an der Grundplatte angeformt werden, so dass an diesen Befestigungsteilen die darauf liegenden Teile, nämlich Zwischenschicht, Foliensensor und gegebenenfalls Deckschicht, befestigt werden.

Die fest angeformten Befestigungsteile können durch Vorsprünge gebildet sein, mit denen sich entsprechende Öffnungen bzw. der weiteren plattenförmigen Teile verbinden.

Weitere Einzelheiten und Merkmale der Erfindung ergeben sich aus der Beschreibung eines Ausführungsbeispiels anhand der Zeichnung In der Zeichnung zeigt
- Figur 1: eine Drucksensor-Einheit gemäß der Erfindung in einer Draufsicht,
- Figur 2: in einer Explosionsdarstellung die Sitzfläche eines Fahrzeugsitzes mit der Drucksensor-Einheit, wie sie in Figur 1 dargestellt ist,
- Figur 3: eine Explosionsdarstellung vergleichbar mit derjenigen der Figur2, allerdings mit einerzusätzlichen, den Foliensensor abdeckenden Deckschicht sowie mit zusätzlichen Befestigungsteilen,
- Figur 4: die Drucksensor-Einheit der Figur 4 in einer vergrößerten Explosionsdarstellung,
- Figur 5: die Drucksensor-Einheit der Figur 4 im zusammengebauten Zustand, und
- Figur 6: einen Schnitt entlang der Schnittlinie A-A in Figur 5 im Bereich des Befestigungslochs, allerdings mit einem in das Befestigungsloch eingesetzten Befestigungs-Clip, der in Figur 5 nicht dargestellt ist.

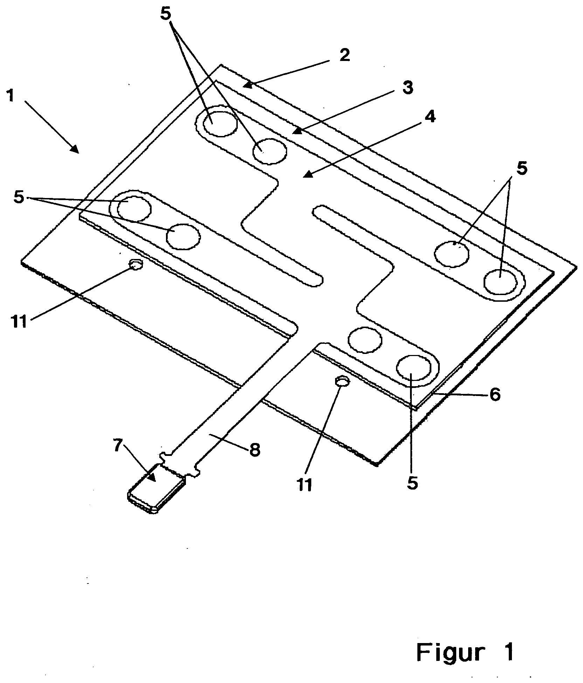

Die Drucksensor-Einheit 1, wie sie in Figur 1 in einer Draufsicht gezeigt ist, umfasst eine Grundplatte 2, auf der ein Foliensensor 3 aufgebracht ist. Der Foliensensor 3 besitzt zwei auf Abstand gehaltene Folien 4, die flächenmäßig strukturiert sind und die einzelne Sensorelemente 5 umfassen. Zwischen Grundplatte 2 und Foliensensor 3 befindet sich eine Zwischenschicht 6. Über diese Zwischenschicht 6 kann, durch geeignete Einstellung der Stauchhärte, die Auslöseschwelle der druckempfindlichen Sensoren 3 eingestellt werden.

Die Grundplatte 2 ist aus einem Kunststoff, vorzugsweise Polyamide oder Polypropylen, gefertigt. Die Dicke liegt vorzugsweise bei 2 bis 5 mm, die ausreichend für die erforderliche Festigkeit ist, aber gleichzeitig die Sitzstruktur nicht wesentlich vergrößert.

Der Foliensensor 3 wird über ein Anschlussteil 7 kontaktiert, das sich an dem Ende einer flexiblen Leiterbahn 8 befinden kann, wie dies in Figur 1 gezeigt ist. Das Anschlussteil 7 kann aber auch unmittelbar auf der Grundplatte 2 befestigt werden.

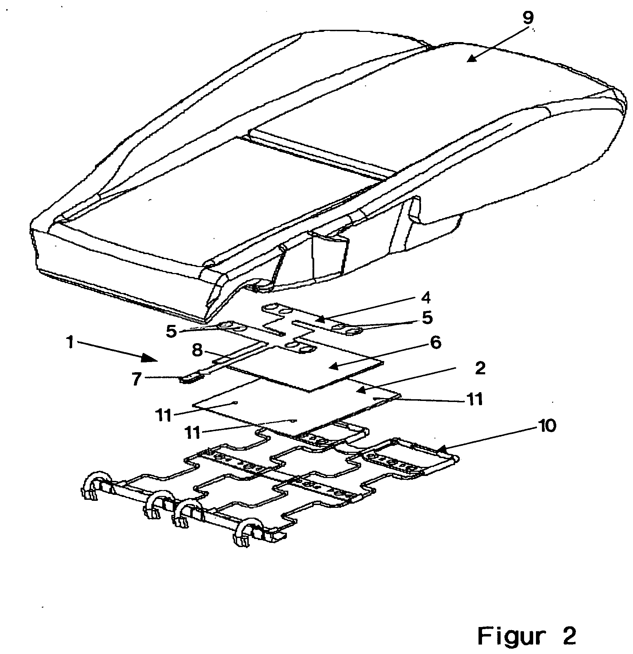

Die Drucksensor-Einheit 1, wie sie in Figur 1 als Modul dargestellt ist, kann in dieser Form in eine Sitzstruktur eingebaut werden. Als Beispiel hierfür ist in Figur 2 ein Sitzpolster, mit dem Bezugszeichen 9 bezeichnet, dargestellt. Die modulare Drucksensor-Einheit 1, die zur Veranschaulichung in einer Explosionsdarstellung gezeigt ist, wird in eine Rahmenstruktur 10 integriert bzw. darauf aufgesetzt.

Für die Befestigung der Drucksensor-Einheit 1 sind in der Grundplatte 2 Bohrungen 11, in dem vorliegenden Ausführungsbeispiel vier dieser Bohrungen, vorgesehen, die sich im Bereich der Ecken der Grundplatte 2 befinden.

Um die Drucksensor-Einheit 1 an der Rahmenstruktur 10 zu befestigen, können in die Bohrungen 9 Halteelemente, beispielsweise Federn, eingehängt werden, die sich am anderen Ende mit der Rahmenstruktur 10 verbinden. Statt der Bohrungen 9 können auch Rastteile oder Haken verwendet werden.

Wie anhand der Figur 2 ersichtlich ist, befindet sich die erfindungsgemäße, modulartig aufgebaute Drucksensor-Einheit 1 mit deren Grundplatte 2 als tragendes Teil unmittelbar im Bereich der Rahmenstruktur 10 und damit unterhalb des Sitzpolsters 9.

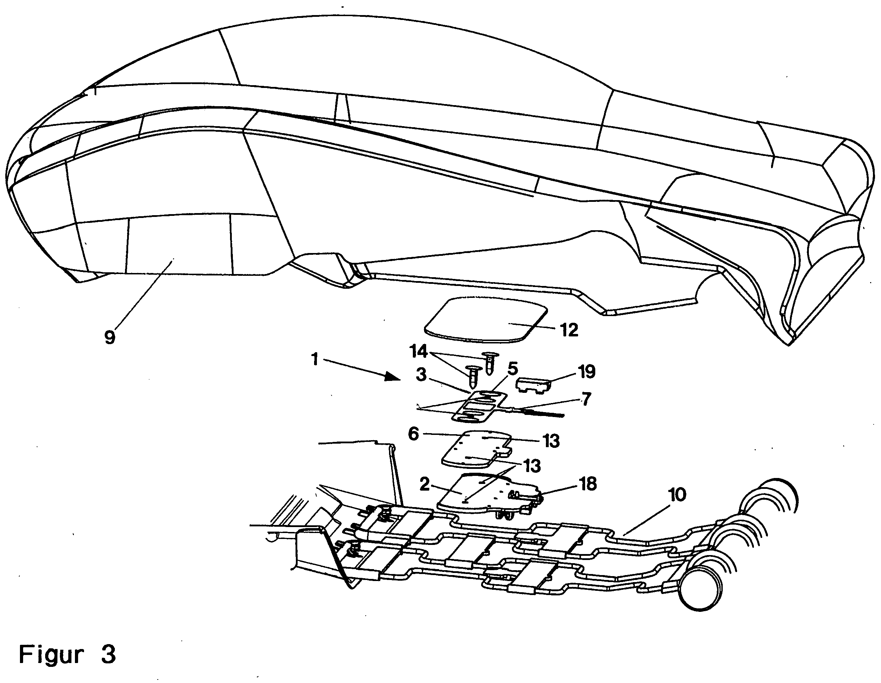

Eine weitere Ausführungsform der Drucksensor-Einheit ist in Figur 3 dargestellt. Hierbei zeigt Figur 3 eine Explosionsdarstellung, die mit derjenigen der Figur 2 vergleichbar ist.

Es ist darauf hinzuweisen, dass in den jeweiligen Figuren Bauteile, die miteinander in ihrer Funktionsweise vergleichbar sind, durch die einzelnen Figuren hinweg mit denselben Bezugszeichen bezeichnet sind. Soweit solche Bauteile anhand einer Figur beschrieben sind, können diese Ausführungen entsprechend auf die anderen Figuren übertragen werden.

In der Darstellung der Figur 3 ist eine zusätzliche, den Foliensensor 3 auf seiner zum Sitzpolster 9 hin weisenden Seite bedeckende Deckschicht 12 vorgesehen. Diese Deckschicht 12 kann beispielsweise aus einer Folie (PET; PU; PA), einem nonwoven-Material, einem Vlies, Filz oder Nadelvlies, sowie aus Zellkautschuk gebildetsein. Nadelvlies ist hierbei als bevorzugtes Material für die Deckschicht 12 anzusehen. Diese Deckschicht 12 stellt die Funktion der Sensoren auch bei inhomogenen Sitzpolsteroberflächen sicher. Gleichzeitig wird durch diese Deckschicht 12 der Foliensensor 3 geschützt.

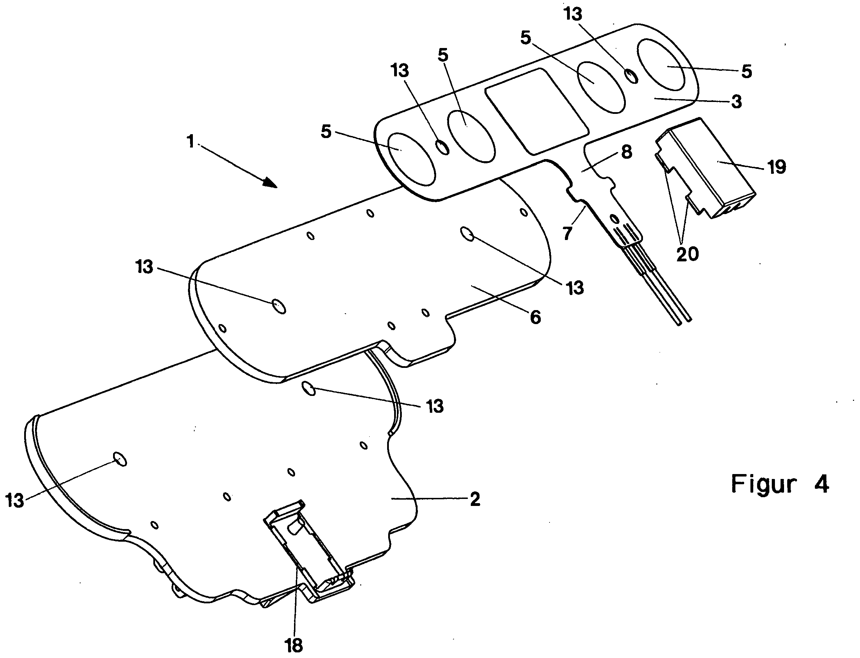

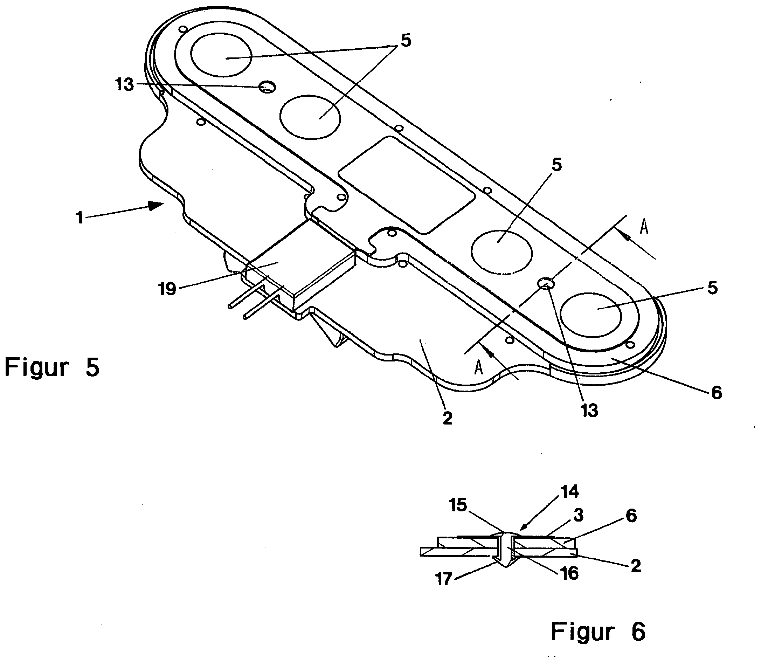

Die Drucksensor-Einheit 1 mit Grundplatte 2, Zwischenschicht 6 und Foliensensor 3, wie sie in Figur 3 zu sehen ist, ist in Figur 4 in einer vergrößerten Explosionsdarstellung gezeigt. In Figur 4, aber auch in Figur 3, sind in der Grundplatte 2, Zwischenschicht 6 und Foliensensor 3 jeweils zwei Bohrungen oder Öffnungen 13 zu sehen, die dann, wenn diese Teile aufeinander liegen, deckungsgleich zueinander ausgerichtet sind, wie dies anhand der Figur 5 zu sehen ist. Um die Teile miteinander zu verbinden, wird durch diese zueinander korrespondierenden Öffnungen 13 jeweils ein Befestigungs-Clip 14 hindurch gesteckt. Dieser Befestigungs-Clip 14 umfasst einen verbreiterten Kopf 15, einen Schaft 16 sowie Widerhaken 17 an seinem anderen Ende.

Wie anhand der Figur 6 erkennbar ist, kann der Befestigungs-Clip 14 durch die Öffnungen 13 hindurch gesteckt werden, indem sich die Widerhaken 17 verformen, die sich dann wieder spreizen und an der Außenseite der Grundplatte 2 anlegen.

Wie weiterhin die Figuren 4 und 5 zeigen, sind an der Grundplatte 2 für das Anschlussteil 7 Befestigungsteile 18 angeformt, die gleichzeitig Positionierungshilfen bilden, in die sich das Anschlussteil 7 einlegt. An diesen Befestigungsteilen 18 wird dann, nachdem die Zwischenschicht6 und der Foliensensor 3 auf die Grundplatte 2 aufgelegt sind, ein Abdeckteil 19 aufgesetzt. Dieses Abdeckteil 19 besitzt hakenförmige Rastvorsprünge 20, die sich an entsprechenden Gegenstücken der Befestigungsteile 18 verriegeln. Mit diesem Abdeckteil 19 wird das Anschlussteil 7 des Foliensensors 3 nicht nur abgedeckt, sondern gleichzeitig auch gehalten, wie dies in Figur 5 dargestellt ist. Die Befestigungsteile 18 können auch in Form einer separaten Einheit auf die Grundplatte 2 aufgesetzt und daran befestigt werden.

## Patentansprüche

1. Drucksensor-Einheit (1) zum Detektieren des Belegungszustandes eines Kraftfahrzeugsitzes, mit mindestens einem Drucksensor (3), der als Foliensensor ausgebildet ist und zwei auf Abstand gehaltene Folien (4) mit einem dazwischen liegenden Abstandsmaterial umfasst, **dadurch gekennzeichnet, dass** die Einheit (1) als Modul aufgebaut ist, mit einer Grundplatte (2), auf der der Foliensensor (3) aufgebracht ist, und mit mindestens einer zwischen der Grundplatte (2) und dem Foliensensor (3) angeordneten, stauchbaren Zwischenschicht (6), und wobei die Grundplatte (2) Verbindungselemente (11) aufweist, mittels der die Grundplatte (2) an der tragenden Struktur (10) eines Sitzes verbindbar ist,
wobei zumindest ein Teil der Verbindungselemente durch selbst verrastende Elemente gebildet ist.

2. Drucksensor-Einheit nach Anspruch 1, **dadurch gekennzeichnet, dass** auf der Grundplatte (2) mehrere Foliendrucksensoren (3) angeordnet sind, die über die Fläche der Grundplatte (2) verteilt sind.

3. Drucksensor-Einheit nach Anspruch 2, **dadurch gekennzeichnet, dass** die Foliendrucksensoren (3) symmetrisch zu einer Mittellinie der Grundplatte (2) verteilt angeordnet sind.

4. Drucksensor-Einheit nach einem der Ansprüche 1 bis 3, **dadurch gekennzeichnet,**
**dass** zumindest ein Teil der Verbindungselemente durch Bohrungen (11) in der Grundplatte (2) gebildet ist.

5. Drucksensor-Einheit nach einem der Ansprüche 1 bis 4, **dadurch gekennzeichnet,**
**dass** die Grundplatte (2) Positionierungshilfen in Form von Aussparungen oder Markierungen für die Positionierung des Foliendrucksensors/der Foliendrucksensor(en) (3) aufweist.

6. Drucksensor-Einheit nach einem der Ansprüche 1 bis 5, **dadurch gekennzeichnet, dass** die Zwischenschicht (6) aus einem elastischen Material gebildet ist.

7. Drucksensor-Einheit nach einem der Ansprüche 1 bis 5, **dadurch gekennzeichnet, dass** die Zwischenschicht (6) aus einem textilen Material gebildet ist.

8. Drucksensor-Einheit nach einem der Ansprüche 1 bis 7, **dadurch gekennzeichnet, dass** der/die Foliendrucksensor(en) (3) Anschlüsse (8) aufweist/aufweisen, die über mindestens ein an der Grundplatte (2) angeordnetes Anschlusselement (7) an eine externe Verkabelung anschließbar sind.

9. Drucksensor-Einheit nach einem der Ansprüche 1 bis 8, **dadurch gekennzeichnet, dass** die Grundplatte (2) als Teil eines Sitzkissenfederungssystems (10) in einen Sitz integrierbar ist.

10. Drucksensor-Einheit nach einem der Ansprüche 1 bis 9, **dadurch gekennzeichnet, dass** zumindest der Foliendrucksensor (3) auf seiner der Zwischenschicht (6) gegenüber liegenden Seite durch eine Deckschicht (12) abgedeckt ist.

11. Drucksensor-Einheit nach einem der Ansprüche 1 bis 10, **dadurch gekennzeichnet, dass** der Foliendrucksensor (3), die Zwischenschicht (6) und die Grundplatte (2) mittels Befestigungsteil(en) (14, 18) miteinander verbunden sind.

12. Drucksensor-Einheit nach Anspruch 11 in Verbindung mit Anspruch 8, **dadurch gekennzeichnet, dass** mindestens ein Befestigungsteil (18) im Bereich des Anschlussteils (7) direkt mit der Grundplatte (2) verbunden ist.

13. Drucksensor-Einheit nach Anspruch 11, **dadurch gekennzeichnet, dass** das Befestigungsteil (18) im Bereich des Anschlussteils (7) als Abdeckteil (19) ausgebildet ist und das Anschlussteil (7) abdeckt.

14. Drucksensor-Einheit nach einem der Ansprüche 11 bis 13, **dadurch gekennzeichnet, dass** die Grundplatte (2) fest angeformte Befestigungsteile (18) aufweist.

15. Drucksensor-Einheit (1) zum Detektieren des Belegungszustandes eines Kraftfahrzeugsitzes, mit mindestens einem Drucksensor (3), der als Foliensensor ausgebildet ist und zwei auf Abstand gehaltene Folien (4) mit einem dazwischen liegenden Abstandsmaterial umfasst, **dadurch gekennzeichnet, dass** die Einheit (1) als Modul aufgebaut ist, mit einer Grundplatte (2), auf der der Foliensensor (3) aufgebracht ist, und mit mindestens einer zwischen der Grundplatte (2) und dem Foliensensor (3) angeordneten, stauchbaren Zwischenschicht (6), und wobei die Grundplatte (2) Verbindungselemente (11) aufweist, mittels der die Grundplatte (2) an der tragenden Struktur (10) eines Sitzes verbindbar ist,
wobei die Grundplatte (2) Positionierungshilfen in Form von Aussparungen oder Markierungen für die Positionierung des Foliendrucksensors/der Foliendrucksensor(en) (3) aufweist.

16. Drucksensor-Einheit nach Anspruch 15, **dadurch gekennzeichnet, dass** auf der Grundplatte (2) mehrere Foliendrucksensoren (3) angeordnet sind, die über die Fläche der Grundplatte (2) verteilt sind.

17. Drucksensor-Einheit nach Anspruch 16, **dadurch gekennzeichnet, dass** die Foliendrucksensoren (3) symmetrisch zu einer Mittellinie der Grundplatte (2) verteilt angeordnet sind.

18. Drucksensor-Einheit nach einem der Ansprüche 15 bis 17, **dadurch gekennzeichnet, dass** zumindest ein Teil der Verbindungselemente durch Bohrungen (11) in der Grundplatte (2) gebildet ist.

19. Drucksensor-Einheit nach einem der Ansprüche 15 bis 18, **dadurch gekennzeichnet, dass** die Zwischenschicht (6) aus einem elastischen Material gebildet ist.

20. Drucksensor-Einheit nach einem der Ansprüche 15 bis 18, **dadurch gekennzeichnet, dass** die Zwischenschicht (6) aus einem textilen Material gebildet ist.

21. Drucksensor-Einheit nach einem der Ansprüche 15 bis 20, **dadurch gekennzeichnet, dass** der/die Foliendrucksensor(en) (3) Anschlüsse (8) aufweist/aufweisen, die über mindestens ein an der Grundplatte (2) angeordnetes Anschlusselement (7) an eine externe Verkabelung anschließbar sind.

22. Drucksensor-Einheit nach einem der Ansprüche 15 bis 21, **dadurch gekennzeichnet, dass** die Grundplatte (2) als Teil eines Sitzkissenfederungssystems (10) in einen Sitz integrierbar ist.

23. Drucksensor-Einheit nach einem der Ansprüche 15 bis 22, **dadurch gekennzeichnet, dass** zumindest der Foliendrucksensor (3) auf seiner der Zwischenschicht (6) gegenüber liegenden Seite durch eine Deckschicht (12) abgedeckt ist.

24. Drucksensor-Einheit nach einem der Ansprüche 15 bis 23, **dadurch gekennzeichnet, dass** der Foliendrucksensor (3), die Zwischenschicht (6) und die Grundplatte (2) mittels Befestigungsteil(en) (14, 18) miteinander verbunden sind.

25. Drucksensor-Einheit nach Anspruch 24 in Verbindung mit Anspruch 21, **dadurch gekennzeichnet, dass** mindestens ein Befestigungsteil (18) im Bereich des Anschlussteils (7) direkt mit der Grundplatte (2) verbunden ist.

26. Drucksensor-Einheit nach Anspruch 24, **dadurch gekennzeichnet, dass** das Befestigungsteil (18) im Bereich des Anschlussteils (7) als Abdeckteil (19) ausgebildet ist und das Anschlussteil (7) abdeckt.

27. Drucksensor-Einheit nach einem der Ansprüche 24 bis 26, **dadurch gekennzeichnet, dass** die Grundplatte (2) fest angeformte Befestigungsteile (18) aufweist.

28. Drucksensor-Einheit (1) zum Detektieren des Belegungszustandes eines Kraftfahrzeugsitzes, mit mindestens einem Drucksensor (3), der als Foliensensor ausgebildet ist und zwei auf Abstand gehaltene Folien (4) mit einem dazwischen liegenden Abstandsmaterial umfasst, **dadurch gekennzeichnet, dass** die Einheit (1) als Modul aufgebaut ist, mit einer Grundplatte (2), auf der der Foliensensor (3) aufgebracht ist, und mit mindestens einer zwischen der Grundplatte (2) und dem Foliensensor (3) angeordneten, stauchbaren Zwischenschicht (6), und wobei die Grundplatte (2) Verbindungselemente (11) aufweist, mittels der die Grundplatte (2) an der tragenden Struktur (10) eines Sitzes verbindbar ist,
wobei der/die Foliendrucksensor(en) (3) Anschlüsse (8) aufweist/aufweisen, die über mindestens ein an der Grundplatte (2) angeordnetes Anschlusselement (7) an eine externe Verkabelung anschließbar sind.

29. Drucksensor-Einheit nach Anspruch 28, **dadurch gekennzeichnet, dass** auf der Grundplatte (2) mehrere Foliendrucksensoren (3) angeordnet sind, die über die Fläche der Grundplatte (2) verteilt sind.

30. Drucksensor-Einheit nach Anspruch 29, **dadurch gekennzeichnet, dass** die Foliendrucksensoren (3) symmetrisch zu einer Mittellinie der Grundplatte (2) verteilt angeordnet sind.

31. Drucksensor-Einheit nach einem der Ansprüche 28 bis 30, **dadurch gekennzeichnet, dass** zumindest ein Teil der Verbindungselemente durch Bohrungen (11) in der Grundplatte (2) gebildet ist.

32. Drucksensor-Einheit nach einem der Ansprüche 28 bis 31, **dadurch gekennzeichnet, dass** die Zwischenschicht (6) aus einem elastischen Material gebildet ist.

33. Drucksensor-Einheit nach einem der Ansprüche 28 bis 31, **dadurch gekennzeichnet, dass** die Zwischenschicht (6) aus einem textilen Material gebildet ist.

34. Drucksensor-Einheit nach einem der Ansprüche 28 bis 33, **dadurch gekennzeichnet, dass** die Grundplatte (2) als Teil eines Sitzkissenfederungssystems (10) in einen Sitz integrierbar ist.

35. Drucksensor-Einheit nach einem der Ansprüche 28 bis 34, **dadurch gekennzeichnet, dass** zumindest der Foliendrucksensor (3) auf seiner der Zwischenschicht (6) gegenüber liegenden Seite durch eine Deckschicht (12) abgedeckt ist.

36. Drucksensor-Einheit nach einem der Ansprüche 28 bis 35, **dadurch gekennzeichnet, dass** der Foliendrucksensor (3), die Zwischenschicht (6) und die Grundplatte (2) mittels Befestigungsteil(en) (14, 18) miteinander verbunden sind.

37. Drucksensor-Einheit nach Anspruch 36, **dadurch gekennzeichnet, dass** mindestens ein Befestigungsteil (18) im Bereich des Anschlussteils (7) direkt mit der Grundplatte (2) verbunden ist.

38. Drucksensor-Einheit nach Anspruch 36, **dadurch gekennzeichnet, dass** das Befestigungsteil (18) im Bereich des Anschlussteils (7) als Abdeckteil (19) ausgebildet ist und das Anschlussteil (7) abdeckt.

39. Drucksensor-Einheit nach einem der Ansprüche 36 bis 38, **dadurch gekennzeichnet, dass** die Grundplatte (2) fest angeformte Befestigungsteile (18) aufweist.

40. Drucksensor-Einheit (1) zum Detektieren des Belegungszustandes eines Kraftfahrzeugsitzes, mit mindestens einem Drucksensor (3), der als Foliensensor ausgebildet ist und zwei auf Abstand gehaltene Folien (4) mit einem dazwischen liegenden Abstandsmaterial umfasst, **dadurch gekennzeichnet, dass** die Einheit (1) als Modul aufgebaut ist, mit einer Grundplatte (2), auf der der Foliensensor (3) aufgebracht ist, und mit mindestens einer zwischen der Grundplatte (2) und dem Foliensensor (3) angeordneten, stauchbaren Zwischenschicht (6), und wobei die Grundplatte (2) Verbindungselemente (11) aufweist, mittels der die Grundplatte (2) an der tragenden Struktur (10) eines Sitzes verbindbar ist,
wobei die Grundplatte (2) als Teil eines Sitzkissenfederungssystems (10) in einen Sitz integrierbar ist.

41. Drucksensor-Einheit nach Anspruch 40, **dadurch gekennzeichnet, dass** auf der Grundplatte (2) mehrere Foliendrucksensoren (3) angeordnet sind, die über die Fläche der Grundplatte (2) verteilt sind.

42. Drucksensor-Einheit nach Anspruch 41, **dadurch gekennzeichnet, dass** die Foliendrucksensoren (3) symmetrisch zu einer Mittellinie der Grundplatte (2) verteilt angeordnet sind.

43. Drucksensor-Einheit nach einem der Ansprüche 40 bis 42, **dadurch gekennzeichnet, dass** zumindest ein Teil der Verbindungselemente durch Bohrungen (11) in der Grundplatte (2) gebildet ist.

44. Drucksensor-Einheit nach einem der Ansprüche 40 bis 43, **dadurch gekennzeichnet, dass** die Zwischenschicht (6) aus einem elastischen Material gebildet ist.

45. Drucksensor-Einheit nach einem der Ansprüche 40 bis 43, **dadurch gekennzeichnet, dass** die Zwischenschicht (6) aus einem textilen Material gebildet ist.

46. Drucksensor-Einheit nach einem der Ansprüche 40 bis 45, **dadurch gekennzeichnet, dass** zumindest der Foliendrucksensor (3) auf seiner der Zwischenschicht (6) gegenüber liegenden Seite durch eine Deckschicht (12) abgedeckt ist.

47. Drucksensor-Einheit nach einem der Ansprüche 40 bis 46, **dadurch gekennzeichnet, dass** der Foliendrucksensor (3), die Zwischenschicht (6) und die Grundplatte (2) mittels Befestigungsteil(en) (14, 18) miteinander verbunden sind.

48. Drucksensor-Einheit nach Anspruch 47, **dadurch gekennzeichnet, dass** das Befestigungsteil (18) im Bereich des Anschlussteils (7) als Abdeckteil (19) ausgebildet ist und das Anschlussteil (7) abdeckt.

49. Drucksensor-Einheit nach einem der Ansprüche 47 bis 48, **dadurch gekennzeichnet, dass** die Grundplatte (2) fest angeformte Befestigungsteile (18) aufweist.

## Claims

1. Pressure sensor unit (1) for detecting the occupancy state of a motor vehicle seat, comprising at least one pressure sensor (3), which is designed as a film sensor and comprises two spaced-apart films (4) with an interposed spacing material, **characterized in that** the unit (1) is constructed as a module, comprising a base plate (2), onto which the film sensor (3) is applied, and at least one compressible intermediate layer (6), which is arranged between the base plate (2) and the film sensor (3), and wherein the base plate (2) comprises connecting elements (11), by means of which the base plate (2) is connectable at the supporting structure (10) of a seat,
wherein at least some of the connecting elements are formed by self-locking elements.

2. Pressure sensor unit according to claim 1, **characterized in that** a plurality of film pressure sensors (3) are arranged on the base plate (2), which are distributed over the surface of the base plate (2).

3. Pressure sensor unit according to claim 2, **characterized in that** the film pressure sensors (3) are arranged symmetrically distributed with respect to a center line of the base plate (2).

4. Pressure sensor unit according to one of claims 1 to 3, **characterized in that** at least some of the connecting elements are formed by bores (11) in the base plate (2).

5. Pressure sensor unit according to one of claims 1 to 4, **characterized in that** the base plate (2) comprises positioning aids in the form of recesses or markings for positioning the film pressure sensor(s) (3).

6. Pressure sensor unit according to one of claims 1 to 5, **characterized in that** the intermediate layer (6) is formed from an elastic material.

7. Pressure sensor unit according to one of claims 1 to 5, **characterized in that** the intermediate layer (6) is formed from a textile material.

8. Pressure sensor unit according to one of claims 1 to 7, **characterized in that** the film pressure sensor(s) (3) has/have connections (8) which can be connected to an external wiring via at least one connection element (7) arranged on the base plate (2).

9. Pressure sensor unit according to one of claims 1 to 8, **characterized in that** the base plate (2) can be integrated into a seat as part of a seat cushion suspension system (10).

10. Pressure sensor unit according to one of claims 1 to 9, **characterized in that** at least the film pressure sensor (3) is covered by a cover layer (12) on its side opposite the intermediate layer (6).

11. Pressure sensor unit according to one of claims 1 to 10, **characterized in that** the film pressure sensor (3), the intermediate layer (6) and the base plate (2) are connected to one another by means of fastening part(s) (14, 18).

12. Pressure sensor unit according to claim 11 in combination with claim 8, **characterized in that** at least one fastening part (18) is directly connected to the base plate (2) in the area of the connection part (7).

13. Pressure sensor unit according to claim 11, **characterized in that** the fastening part (18) is designed as a cover part (19) in the area of the connection part (7) and covers the connection part (7).

14. Pressure sensor unit according to one of claims 11 to 13, **characterized in that** the base plate (2) comprises firmly molded-on fastening parts (18).

15. Pressure sensor unit (1) for detecting the occupancy state of a motor vehicle seat, comprising at least one pressure sensor (3), which is designed as a film sensor and comprises two spaced-apart films (4) with an interposed spacing material, **characterized in that** the unit (1) is constructed as a module, comprising a base plate (2), onto which the film sensor (3) is applied, and at least one compressible intermediate layer (6), which is arranged between the base plate (2) and the film sensor (3), and wherein the base plate (2) comprises connecting elements (11), by means of which the base plate (2) is connectable at the supporting structure (10) of a seat,
wherein the base plate (2) comprises positioning aids in the form of recesses or markings for positioning the film pressure sensor(s) (3).

16. Pressure sensor unit according to claim 15, **characterized in that** a plurality of film pressure sensors (3) are arranged on the base plate (2), which are distributed over the surface of the base plate (2).

17. Pressure sensor unit according to claim 16, **characterized in that** the film pressure sensors (3) are arranged symmetrically distributed with respect to a center line of the base plate (2).

18. Pressure sensor unit according to one of claims 15 to 17, **characterized in that** at least some of the connecting elements are formed by bores (11) in the base plate (2).

19. Pressure sensor unit according to one of claims 15 to 18, **characterized in that** the intermediate layer (6) is formed from an elastic material.

20. Pressure sensor unit according to one of claims 15 to 18, **characterized in that** the intermediate layer (6) is formed from a textile material.

21. Pressure sensor unit according to one of claims 15 to 20, **characterized in that** the film pressure sensor(s) (3) has/have connections (8) which can be connected to an external wiring via at least one connection element (7) arranged on the base plate (2).

22. Pressure sensor unit according to one of claims 15 to 21, **characterized in that** the base plate (2) can be integrated into a seat as part of a seat cushion suspension system (10).

23. Pressure sensor unit according to one of claims 15 to 22, **characterized in that** at least the film pressure sensor (3) is covered by a cover layer (12) on its side opposite the intermediate layer (6).

24. Pressure sensor unit according to one of claims 15 to 23, **characterized in that** the film pressure sensor (3), the intermediate layer (6) and the base plate (2) are connected to one another by means of fastening part(s) (14, 18).

25. Pressure sensor unit according to claim 24 in combination with claim 21, **characterized in that** at least one fastening part (18) is directly connected to the base plate (2) in the area of the connection part (7).

26. Pressure sensor unit according to claim 24, **characterized in that** the fastening part (18) is designed as a cover part (19) in the area of the connection part (7) and covers the connection part (7).

27. Pressure sensor unit according to one of claims 24 to 26, **characterized in that** the base plate (2) comprises firmly molded-on fastening parts (18).

28. Pressure sensor unit (1) for detecting the occupancy state of a motor vehicle seat, comprising at least one pressure sensor (3), which is designed as a film sensor and comprises two spaced-apart films (4) with an interposed spacing material, **characterized in that** the unit (1) is constructed as a module, comprising a base plate (2), onto which the film sensor (3) is applied, and at least one compressible intermediate layer (6), which is arranged between the base plate (2) and the film sensor (3), and wherein the base plate (2) comprises connecting elements (11), by means of which the base plate (2) is connectable at the supporting structure (10) of a seat,
wherein the film pressure sensor(s) (3) has/have connections (8) which can be connected to an external wiring via at least one connection element (7) arranged on the base plate (2).

29. Pressure sensor unit according to claim 28, **characterized in that** a plurality of film pressure sensors (3) are arranged on the base plate (2), which are distributed over the surface of the base plate (2).

30. Pressure sensor unit according to claim 29, **characterized in that** the film pressure sensors (3) are arranged symmetrically distributed with respect to a center line of the base plate (2).

31. Pressure sensor unit according to one of claims 28 to 30, **characterized in that** at least some of the connecting elements are formed by bores (11) in the base plate (2).

32. Pressure sensor unit according to one of claims 28 to 31, **characterized in that** the intermediate layer (6) is formed from an elastic material.

33. Pressure sensor unit according to one of claims 28 to 31, **characterized in that** the intermediate layer (6) is formed from a textile material.

34. Pressure sensor unit according to one of claims 28 to 33, **characterized in that** the base plate (2) can be integrated into a seat as part of a seat cushion suspension system (10).

35. Pressure sensor unit according to one of claims 28 to 34, **characterized in that** at least the film pressure sensor (3) is covered by a cover layer (12) on its side opposite the intermediate layer (6).

36. Pressure sensor unit according to one of claims 28 to 35, **characterized in that** the film pressure sensor (3), the intermediate layer (6) and the base plate (2) are connected to one another by means of fastening part(s) (14, 18).

37. Pressure sensor unit according to claim 36, **characterized in that** at least one fastening part (18) is directly connected to the base plate (2) in the area of the connection part (7).

38. Pressure sensor unit according to claim 36, **characterized in that** the fastening part (18) is designed as a cover part (19) in the area of the connection part (7) and covers the connection part (7).

39. Pressure sensor unit according to one of claims 36 to 38, **characterized in that** the base plate (2) comprises firmly molded-on fastening parts (18).

40. Pressure sensor unit (1) for detecting the occupancy state of a motor vehicle seat, comprising at least one pressure sensor (3), which is designed as a film sensor and comprises two spaced-apart films (4) with an interposed spacing material, **characterized in that** the unit (1) is constructed as a module, comprising a base plate (2), onto which the film sensor (3) is applied, and at least one compressible intermediate layer (6), which is arranged between the base plate (2) and the film sensor (3), and wherein the base plate (2) comprises connecting elements (11), by means of which the base plate (2) is connectable at the supporting structure (10) of a seat,
wherein the base plate (2) is integratable into a seat as part of a seat cushion suspension system (10).

41. Pressure sensor unit according to claim 40, **characterized in that** a plurality of film pressure sensors (3) are arranged on the base plate (2), which are distributed over the surface of the base plate (2).

42. Pressure sensor unit according to claim 41, **characterized in that** the film pressure sensors (3) are arranged symmetrically distributed with respect to a center line of the base plate (2).

43. Pressure sensor unit according to one of claims 40 to 42, **characterized in that** at least some of the connecting elements are formed by bores (11) in the base plate (2).

44. Pressure sensor unit according to one of claims 40 to 43, **characterized in that** the intermediate layer (6) is formed from an elastic material.

45. Pressure sensor unit according to one of claims 40 to 43, **characterized in that** the intermediate layer (6) is formed from a textile material.

46. Pressure sensor unit according to one of claims 40 to 45, **characterized in that** at least the film pressure sensor (3) is covered by a cover layer (12) on its side opposite the intermediate layer (6).

47. Pressure sensor unit according to one of claims 40 to 46, **characterized in that** the film pressure sensor (3), the intermediate layer (6) and the base plate (2) are connected to one another by means of fastening part(s) (14, 18).

48. Pressure sensor unit according to claim 47, **characterized in that** the fastening part (18) is designed as a cover part (19) in the area of the connection part (7) and covers the connection part (7).

49. Pressure sensor unit according to one of claims 47 to 48, **characterized in that** the base plate (2) comprises firmly molded-on fastening parts (18).

## Revendications

1. Unité de capteur de pression (1) destinée à détecter l'état d'occupation d'un siège de véhicule à moteur, avec au moins un capteur de pression (3), qui est réalisé sous la forme d'un capteur à membrane et qui comprend deux membranes (4) maintenues espacées avec un matériau d'espacement situé entre celles-ci, **caractérisée en ce que** l'unité (1) est conçue comme un module, avec une plaque de base (2), sur laquelle est appliqué le capteur à membrane (3), et avec au moins une couche intermédiaire (6) comprimable, disposée entre la plaque de base (2) et le capteur à membrane (3), et dans laquelle la plaque de base (2) présente des éléments de liaison (11), au moyen desquels la plaque de base (2) peut être reliée à la structure porteuse (10) d'un siège,
dans laquelle au moins une partie des éléments de liaison est formée par des éléments à encliquetage automatique.

2. Unité de capteur de pression selon la revendication 1, **caractérisée en ce que** plusieurs capteurs de pression à membrane (3), qui sont répartis sur la surface de la plaque de base (2), sont disposés sur la plaque de base (2).

3. Unité de capteur de pression selon la revendication 2, **caractérisée en ce que** les capteurs de pression à membrane (3) sont disposés de manière répartis de façon symétriquement par rapport à une ligne médiane de la plaque de base (2).

4. Unité de capteur de pression selon l'une quelconque des revendications 1 à 3, **caractérisée en ce qu'**au moins une partie des éléments de liaison est formée par des trous (11) dans la plaque de base (2).

5. Unité de capteur de pression selon l'une quelconque des revendications 1 à 4, **caractérisée en ce que** la plaque de base (2) présente des auxiliaires de positionnement sous la forme d'évidements ou de marquages pour le positionnement du capteur de pression à membrane/des capteurs de pression à membrane (3).

6. Unité de capteur de pression selon l'une quelconque des revendications 1 à 5, **caractérisée en ce que** la couche intermédiaire (6) est formée d'un matériau élastique.

7. Unité de capteur de pression selon l'une quelconque des revendications 1 à 6, **caractérisée en ce que** la couche intermédiaire (6) est formée d'un matériau élastique.

8. Unité de capteur de pression selon l'une quelconque des revendications 1 à 7, **caractérisée en ce que** le/les capteur(s) de pression à membrane (3) présente/présentent des raccords (8), qui peuvent être raccordés à un câblage externe par l'intermédiaire d'au moins un élément de raccordement (7) disposé sur la plaque de base (2).

9. Unité de capteur de pression selon l'une quelconque des revendications 1 à 8, **caractérisée en ce que** la plaque de base (2) peut être intégrée en tant que partie d'un système de suspension de coussin de siège (10) dans un siège.

10. Unité de capteur de pression selon l'une quelconque des revendications 1 à 9, **caractérisée en ce qu'au** moins le capteur de pression à membrane (3) est recouvert sur sa face opposée à la couche intermédiaire (6) par une couche de recouvrement (12).

11. Unité de capteur de pression selon l'une quelconque des revendications 1 à 10, **caractérisée en ce que** le capteur de pression à membrane (3), la couche intermédiaire (6) et la plaque de base (2) sont reliés les uns aux autres au moyen de partie(s) de fixation (14, 18).

12. Unité de capteur de pression selon la revendication 11 en liaison avec la revendication 8, **caractérisée en ce qu'**au moins une partie de fixation (18) est reliée directement à la plaque de base (2) dans la zone de la partie de raccordement (7).

13. Unité de capteur de pression selon la revendication 11, **caractérisée en ce que** la partie de fixation (18) est réalisée sous la forme d'une partie de recouvrement (19) dans la zone de la partie de raccordement (7) et recouvre la partie de raccordement (7).

14. Unité de capteur de pression selon l'une quelconque des revendications 11 à 13, **caractérisée en ce que** la plaque de base (2) présente des parties de fixation (18) formées fixement.

15. Unité de capteur de pression (1) destinée à détecter l'état d'occupation d'un siège de véhicule à moteur, avec au moins un capteur de pression (3), qui est réalisé sous la forme d'un capteur à membrane et qui comprend deux membranes (4) maintenues espacées avec un matériau d'espacement situé entre celles-ci, **caractérisée en ce que** l'unité (1) est conçue comme un module, avec une plaque de base (2), sur laquelle est appliqué le capteur à membrane (3), et avec au moins une couche intermédiaire (6) comprimable, disposée entre la plaque de base (2) et le capteur à membrane (3), et dans laquelle la plaque de base (2) présente des éléments de liaison (11), au moyen desquels la plaque de base (2) peut être reliée à la structure porteuse (10) d'un siège,
dans laquelle la plaque de base (2) présente des auxiliaires de positionnement sous forme d'évidements ou de marquages pour le positionnement du/des capteur(s) de pression à membrane (3).

16. Unité de capteur de pression selon la revendication 15, **caractérisée en ce que** plusieurs capteurs de pression à membrane (3), qui sont répartis sur la surface de la plaque de base (2), sont disposés sur la plaque de base (2).

17. Unité de capteur de pression selon la revendication 16, **caractérisée en ce que** les capteurs de pression à membrane (3) sont disposés de manière répartis de façon symétriquement par rapport à une ligne médiane de la plaque de base (2).

18. Unité de capteur de pression selon l'une quelconque des revendications 15 à 17, **caractérisée en ce qu'au** moins une partie des éléments de liaison est formée par des trous (11) dans la plaque de base (2).

19. Unité de capteur de pression selon l'une quelconque des revendications 15 à 18, **caractérisée en ce que** la couche intermédiaire (6) est formée d'un matériau élastique.

20. Unité de capteur de pression selon l'une quelconque des revendications 15 à 18, **caractérisée en ce que** la couche intermédiaire (6) est formée d'un matériau élastique.

21. Unité de capteur de pression selon l'une quelconque des revendications 15 à 20, **caractérisée en ce que** le/les capteur(s) de pression à membrane (3) présente/présentent des raccords (8), qui peuvent être raccordés à un câblage externe par l'intermédiaire d'au moins un élément de raccordement (7) disposé sur la plaque de base (2).

22. Unité de capteur de pression selon l'une quelconque des revendications 15 à 21, **caractérisée en ce que** la plaque de base (2) peut être intégrée en tant que partie d'un système de suspension de coussin de siège (10) dans un siège.

23. Unité de capteur de pression selon l'une quelconque des revendications 15 à 22, **caractérisée en ce qu'au** moins le capteur de pression à membrane (3) est recouvert sur sa face opposée à la couche intermédiaire (6) par une couche de recouvrement (12).

24. Unité de capteur de pression selon l'une quelconque des revendications 15 à 23, **caractérisée en ce que** le capteur de pression à membrane (3), la couche intermédiaire (6) et la plaque de base (2) sont reliés les uns aux autres au moyen de partie(s) de fixation (14, 18).

25. Unité de capteur de pression selon la revendication 24 en liaison avec la revendication 21, **caractérisée en ce qu'**au moins une partie de fixation (18) est reliée directement à la plaque de base (2) dans la zone de la partie de raccordement (7).

26. Unité de capteur de pression selon la revendication 24, **caractérisée en ce que** la partie de fixation (18) est réalisée sous la forme d'une partie de recouvrement (19) dans la zone de la partie de raccordement (7) et recouvre la partie de raccordement (7).

27. Unité de capteur de pression selon l'une quelconque des revendications 24 à 26, **caractérisée en ce que** la plaque de base (2) présente des parties de fixation (18) formées fixement.

28. Unité de capteur de pression (1) destinée à détecter l'état d'occupation d'un siège de véhicule à moteur, avec au moins un capteur de pression (3), qui est réalisé sous la forme d'un capteur à membrane et qui comprend deux membranes (4) maintenues espacées avec un matériau d'espacement situé entre celles-ci, **caractérisée en ce que** l'unité (1) est conçue comme un module, avec une plaque de base (2), sur laquelle est appliqué le capteur à membrane (3), et avec au moins une couche intermédiaire (6) comprimable, disposée entre la plaque de base (2) et le capteur à membrane (3), et dans laquelle la plaque de base (2) présente des éléments de liaison (11), au moyen desquels la plaque de base (2) peut être reliée à la structure porteuse (10) d'un siège,
dans laquelle le/les capteur(s) de pression à membrane (3) présente/présentent des raccords (8), qui peuvent être raccordées à un câblage externe par l'intermédiaire d'au moins un élément de raccordement (7) disposé sur la plaque de base (2).

29. Unité de capteur de pression selon la revendication 28, **caractérisée en ce que** plusieurs capteurs de pression à membrane (3), qui sont répartis sur la surface de la plaque de base (2), sont disposés sur la plaque de base (2).

30. Unité de capteur de pression selon la revendication 29, **caractérisée en ce que** les capteurs de pression à membrane (3) sont disposés de manière répartis de façon symétrique par rapport à une ligne médiane de la plaque de base (2).

31. Unité de capteur de pression selon l'une quelconque des revendications 28 à 30, **caractérisée en ce qu'au** moins une partie des éléments de liaison est formée par des trous (11) dans la plaque de base (2).

32. Unité de capteur de pression selon l'une quelconque des revendications 28 à 31, **caractérisée en ce que** la couche intermédiaire (6) est formée d'un matériau élastique.

33. Unité de capteur de pression selon l'une quelconque des revendications 28 à 31, **caractérisée en ce que** la couche intermédiaire (6) est formée d'un matériau élastique.

34. Unité de capteur de pression selon l'une quelconque des revendications 28 à 33, **caractérisée en ce que** la plaque de base (2) peut être intégrée en tant que partie d'un système de suspension de coussin de siège (10) dans un siège.

35. Unité de capteur de pression selon l'une quelconque des revendications 28 à 34, **caractérisée en ce qu'au** moins le capteur de pression à membrane (3) est recouvert sur sa face opposée à la couche intermédiaire (6) par une couche de recouvrement (12).

36. Unité de capteur de pression selon l'une quelconque des revendications 28 à 35, **caractérisée en ce que** le capteur de pression à membrane (3), la couche intermédiaire (6) et la plaque de base (2) sont reliés les uns aux autres au moyen de partie(s) de fixation (14, 18).

37. Unité de capteur de pression selon la revendication 36 en liaison avec la revendication 21, **caractérisée en ce qu'**au moins une partie de fixation (18) est reliée directement à la plaque de base (2) dans la zone de la partie de raccordement (7).

38. Unité de capteur de pression selon la revendication 36, **caractérisée en ce que** la partie de fixation (18) est réalisée sous la forme d'une partie de recouvrement (19) dans la zone de la partie de raccordement (7) et recouvre la partie de raccordement (7).

39. Unité de capteur de pression selon l'une quelconque des revendications 36 à 38, **caractérisée en ce que** la plaque de base (2) présente des parties de fixation (18) formées fixement.

40. Unité de capteur de pression (1) destinée à détecter l'état d'occupation d'un siège de véhicule à moteur, avec au moins un capteur de pression (3), qui est réalisé sous la forme d'un capteur à membrane et qui comprend deux membranes (4) maintenues espacées avec un matériau d'espacement situé entre celles-ci, **caractérisée en ce que** l'unité (1) est conçue comme un module, avec une plaque de base (2), sur laquelle est appliqué le capteur à membrane (3), et avec au moins une couche intermédiaire (6) comprimable, disposée entre la plaque de base (2) et le capteur à membrane (3), et dans laquelle la plaque de base (2) présente des éléments de liaison (11), au moyen desquels la plaque de base (2) peut être reliée à la structure porteuse (10) d'un siège,
dans laquelle la plaque de base (2) peut être intégrée dans un siège en tant que partie d'un système de suspension de coussin de siège (10).

41. Unité de capteur de pression selon la revendication 40, **caractérisée en ce que** plusieurs capteurs de pression à membrane (3), qui sont répartis sur la surface de la plaque de base (2), sont disposés sur la plaque de base (2).

42. Unité de capteur de pression selon la revendication 41, **caractérisée en ce que** les capteurs de pression à membrane (3) sont disposés de manière répartis de façon symétrique par rapport à une ligne médiane de la plaque de base (2).

43. Unité de capteur de pression selon l'une quelconque des revendications 40 à 42, **caractérisée en ce qu'au** moins une partie des éléments de liaison est formée par des trous (11) dans la plaque de base (2).

44. Unité de capteur de pression selon l'une quelconque des revendications 40 à 43, **caractérisée en ce que** la couche intermédiaire (6) est formée d'un matériau élastique.

45. Unité de capteur de pression selon l'une quelconque des revendications 40 à 43, **caractérisée en ce que** la couche intermédiaire (6) est formée d'un matériau élastique.

46. Unité de capteur de pression selon l'une quelconque des revendications 40 à 45, **caractérisée en ce qu'au** moins le capteur de pression à membrane (3) est recouvert sur sa face opposée à la couche intermédiaire (6) par une couche de recouvrement (12).

47. Unité de capteur de pression selon l'une quelconque des revendications 40 à 46, **caractérisée en ce que** le capteur de pression à membrane (3), la couche intermédiaire (6) et la plaque de base (2) sont reliés les uns aux autres au moyen de partie(s) de fixation (14, 18).

48. Unité de capteur de pression selon la revendication 47, **caractérisée en ce que** la partie de fixation (18) est réalisée sous la forme d'une partie de recouvrement (19) dans la zone de la partie de raccordement (7) et recouvre la partie de raccordement (7).

49. Unité de capteur de pression selon l'une quelconque des revendications 47 à 48, **caractérisée en ce que** la plaque de base (2) présente des parties de fixation (18) formées fixement.
